# EUROPEAN PATENT SPECIFICATION

(11) **EP 1 385 142 B1**
(45) Date of publication and mention of the grant of the patent: **31.08.2016**
(21) Application number: 03254397.7
(22) Date of filing: 10.07.2003
(51) Int. Cl.: G09G 5/02, G09G 3/20

(54) **Display device with input signal checking**
Anzeigevorrichtung mit prüfung eines Eingangssignals
Système d'affichage avec contrôle du signal d'entrèe

(30) Priority: 11.07.2002 KR 2002040408
(43) Date of publication of application: 28.01.2004
(73) Proprietor: Samsung Electronics Co., Ltd., Gyeonggi-do 16677 (KR)
(72) Inventor: Kim, Young-chan, Uiwang-si Gyeonggi-do (KR)
(74) Representative: Walaski, Jan Filip

(56) References cited:
- US-A- 4 772 948
- US-A- 5 999 148
- US-A1- 2001 023 492
- US-A1- 2002 080 128
- US-B1- 6 323 828
- US-B1- 6 566 857

## Description

The present invention relates to display device for displaying images in dependence on an input RGB video signal.

Desktop computer systems generally comprise a system box and a monitor. The monitor receives red, green and blue (RGB) signals, a horizontal synchronization signal *H_sync,* and a vertical synchronization signal *V_sync* from the system box and displays an image on its screen in dependence on the received signals.

Whenever the monitor receives an abnormal horizontal synchronization signal or an abnormal vertical synchronization signal from the system box, the monitor enters a suspend mode, a standby mode or an off mode and informs a user of the abnormal synchronization signal. The suspend mode is entered when a horizontal synchronization signal is detected but not a vertical synchronization signal. The standby mode is entered when the vertical synchronization signal is detected but not the horizontal synchronization. The off mode is entered when neither the vertical nor horizontal synchronization signals are detected. The monitor also informs the user of the input of a vertical or horizontal synchronization signal that does not fall within a signal range prescribed in the monitors specification.

However, even if both vertical and horizontal synchronization signals are input normally, there remains the possibility that one or more of the RGB signals may be abnormal due to a malfunction in the system box. In this case, it is difficult for a user to determine whether an abnormal displayed image is the result of a malfunction in the system box or in the monitor itself. Therefore, the user must reboot the system box or turn the monitor off and on to identify the source of the problem.

US 4,772,948 discloses a colour graphics system provided with video analogue self-test hardware for testing the system elements between the frame buffer and the CRT display monitor, including a bi-directional data bus between the graphics processor and the colour map, an analogue comparator, an integrator and an analogue multiplexer.

US 6,323,828 discloses a device designed to test the signal output to a display through the use of test patterns.

According to the invention, there is provided a display device according to claim 1 and a method of detecting an abnormal RGB video signal in a display device according to claim 5.

An embodiment of the present invention will now be described, by way of example, with reference to the accompanying drawings, in which:
Figure 1 is a block diagram of a monitor according to the present invention;
Figure 2 is a diagram illustrating the structure of a minimum value detector of the monitor of Figure 1;
Figure 3 is a flowchart illustrating a method of sorting out an abnormal image signal input to a monitor according to the present invention;
Figure 4 is a flowchart illustrating a method of delivering a warning message when an abnormal image signal is output from a monitor according to the present invention;
Figure 5 illustrates an on screen display (ODS) menu to enable and disable a function for checking an abnormal video signal in a display device according to the present invention; and
Figure 6 illustrates an example of a screen, containing an OSD warning message, displayed on a monitor according to the present invention.

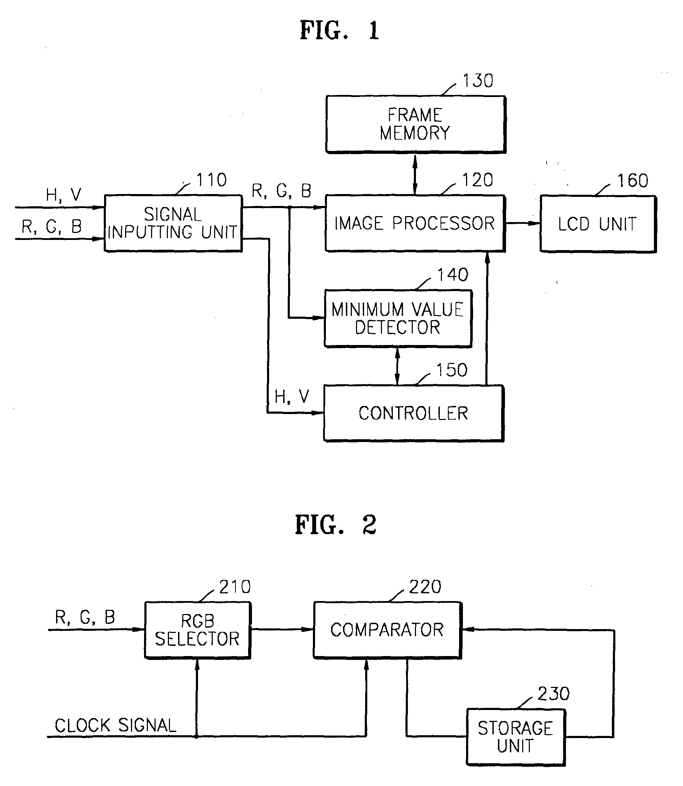

Referring to Figure 1, a monitor includes a signal input unit 110 receives RGB signals and a vertical/horizontal signal from a system box (not shown).

A minimum value detector 140 receives the RGB signals, received by the input unit 110, in order to check whether the R, G or B signals is abnormal by detecting the minimum level in a particular region of the R, G and B signals.

A controller 150 enables and disables the abnormal video checking function, compares the minimum levels, detected by the minimum value detector 140, with a predetermined level and finally determines whether the any of the R,G or B signals abnormal.

An image processor 120 amplifies the R, G and B signals from the signal input unit 110, mixes the R, G and B signals with an OSD signal and performs contrast control of the amplified R, G and B signals. More particularly, the image processor 120 generates an OSD warning message signal that indicates the inclusion of an abnormal input R, G or B signal as determined by the controller 150, and combines the OSD signal and the video signal.

A frame memory 130 stores, in units of frames, video signals generated by the image processor 120.

A liquid crystal display (LCD) unit 160 output and displays an image defined by the video signal stored in the frame memory 130.

Referring to Figure 2, the minimum value detector 140 comprises an RGB selector 210 which selects one of the R,G or B signals, which are input in response to a sampling clock signal, to check if any of the R, G or B signals are abnormal.

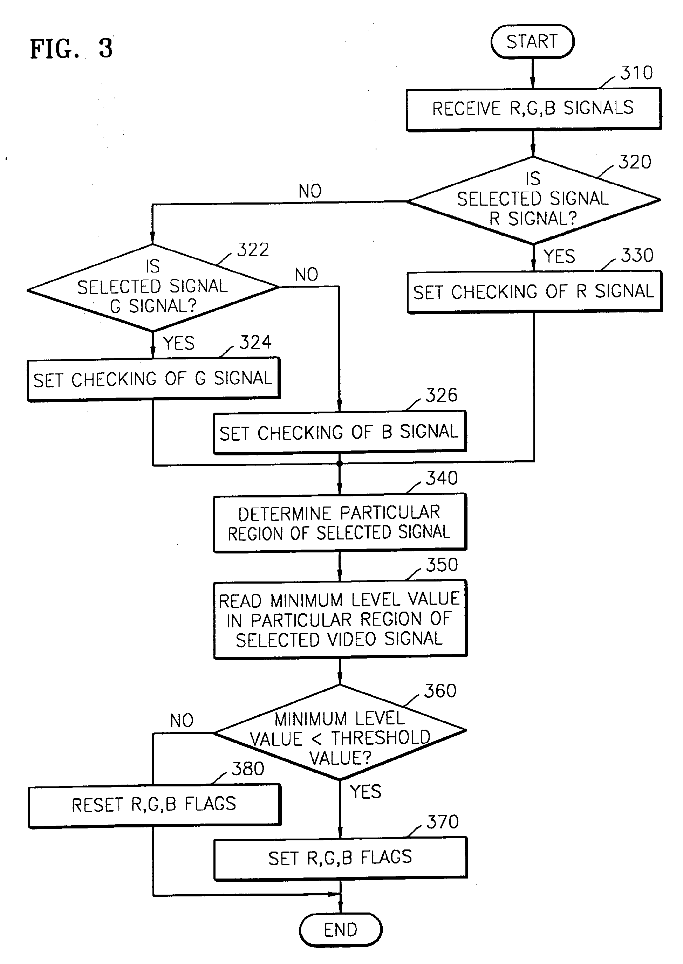

Referring to Figure 3, R,G and B signals are received from a system box in step 310. One of the R,G and B signals is selected for checking in steps 320-326. First, if the R signal is to be checked (step 320) and, if so, the R signal is set at step 330. If the R signal is not selected, it is determined whether the G signal is selected for checking at step 322. If the selected signal is the G signal, checking of the G signal is set at step 324. Otherwise, the B signal is checked at step 326. A determination is then made as to the region of the selected R, G or B signal that will be checked in step 340.

After a predetermined time, the minimum pixel level value in the certain region of the selected R, G or B signal is read at step 350 by the controller 150. The read minimum pixel level value is compared with a predetermined threshold value at step 360 by the controller 150. The threshold value is a reference value that is used to detect the presence of the R, G and B signals.

The minimum pixel level is determined as follows. A comparator 220 compares the current pixel level value within the particular region of the signal, selected by the RGB selector 210, with a pixel level value stored in a storage unit 230, and if the current value is lower than the stored value, replaces the stored value with the current value.

When the pixel level value in the particular region of the selected signal is identical with a predetermined pixel level value, the comparator 220 considers the pixel level value in the particular region as being a minimum pixel level value. During this process, the comparator 220 compares the minimum pixel level value in the particular region with the predetermined pixel level value in response to a sampling clock signal. In other words, the minimum value detector 140 of Figure 2 compares the minimum pixel level value in a particular region of a selected video signal with a previous minimum pixel level value and detects a minimum pixel level value in a particular region of a video signal.

If the read minimum level value is smaller than the predetermined threshold value, a flag that indicates that the selected R, G or B signal is abnormal is set in step 370. Conversely, if the read minimum level value is larger than that predetermined threshold value, the flag is reset at step 380. Thus, after steps 370 and 380, flags that indicate whether the selected R, G or B signal is abnormal are set or reset as necessary.

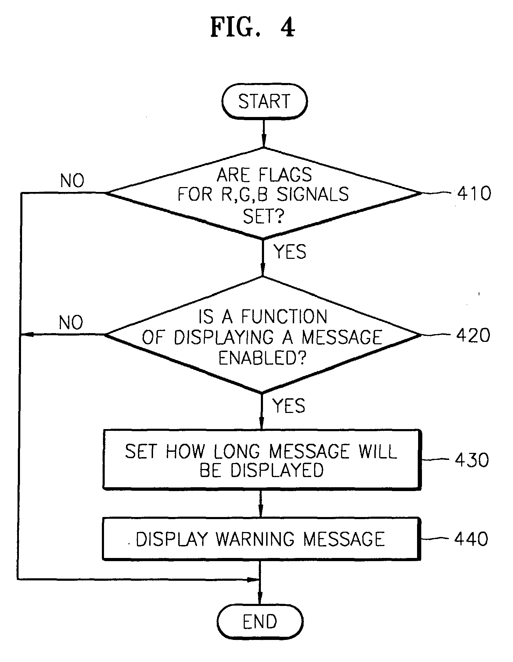

Referring to Figure 4, in order to display a warning message, the R, G and B abnormal signal flags are checked to determine whether any are set to 1 (true) at step 410. Next, if at least one of the flags indicates that one of the R,G and B signals is abnormal, it is determined whether a message display function is enabled at step 420. If the message display function is enabled, the message display duration is determined at step 430. A warning message is then displayed using an OSD signal on the monitor's screen for the determined duration at step 440.

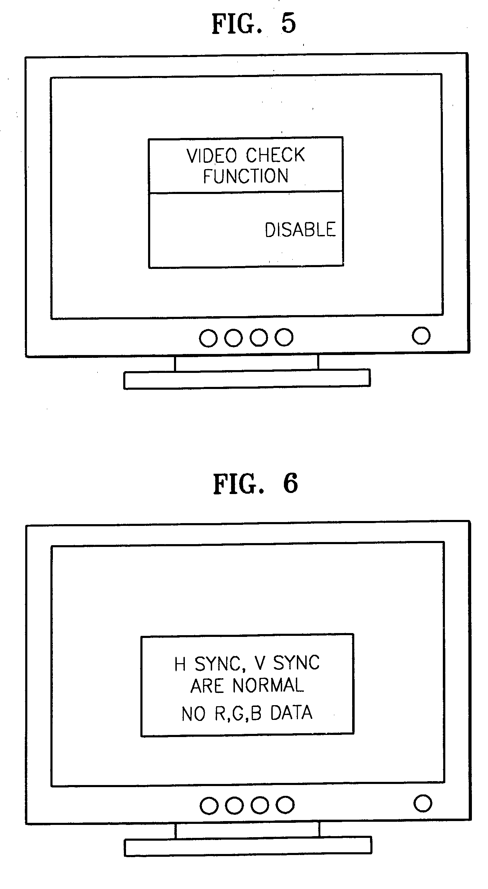

Referring to Figure 5, when a user disables the video signal checking function, the display device displays messages reading "VIDEO CHECK function" and "DISABLE" on a screen.

Referring to Figure 6, when the abnormal R,G or B signal detecting function is enabled and no R, G or B signals are not received, the display device displays messages reading "H SYNC and V SYNC are normal" and "no R,G,B data" on the monitor's screen. Also, if one or two of the R, G and B signal is abnormal, a suitable warning message is displayed on a screen.

As described above, according to the present invention, a monitor connected to a system box checks R, G and B signals, as well as vertical/horizontal synchronization signals, and displays information indicating whether or not a video signal is normal on a screen. Therefore, a user can easily check whether an abnormal screen is caused by a malfunction of the host or a malfunction of the monitor.

## Claims

1. A display device for displaying images in dependence on an input RGB video signal, a horizontal synchronization signal (H), and a vertical synchronization signal (V) in which both the vertical and the horizontal synchronization signals are input, the display device comprising video checking means (140, 150) for detecting an abnormal state of an input R, G or B signal; and alert means (120, 150) for alerting a user in the event of detection of an abnormal R, G or B signal by the video checking means (140 150), the display device being **characterised in that**:
the video checking means comprises a minimum detecting means (140) for determining a minimum pixel level value of a predetermined signal portion of a selected input R, G or B signal of the input RGB video signal; and
a a controller (150) for comparing the minimum pixel level value determined by the minimum detecting means (140) with a reference value;
wherein the minimum detecting means (140) is arranged to compare (220) a minimum pixel level value in said predetermined signal portion of the selected R, G or B signal with a stored minimum pixel level value (230) of a previous R, G or B signal, wherein
if the current value is lower than the stored minimum pixel level value, the minimum detecting means replaces the stored value with the current value; and wherein
if it is determined by the controller (150) that the current stored minimum pixel level value is smaller than the reference value, a flag that indicates that the selected R, G or B signal is abnormal is set.

2. A display device according to claim 1, wherein the alerting means (120, 150) includes video signal generating means for generating a video message signal, for display by the display device, indicating which of the R, G and B signals are abnormal in the event of detection of an abnormal R, G or B signal by the video checking means (140, 150).

3. The display device of claim 1 wherein the minimum value detector comprises:
a signal selector (210) for selecting one of the received R,G,B signals;
a storage unit (230) for storing the minimum pixel level value detected in the particular region of the selected R,G,B signal; and
a comparator (220) for comparing the minimum pixel level value in the particular region of the selected R,G,B signal with the stored minimum pixel level value detected in the particular region of a previous R,G,B signal, and thereby determining the minimum pixel level value.

4. The display device of claim 1, wherein the controller is configured for generating an on-screen-display (OSD) signal that enables and disables an R,G,B, signal checking function.

5. A method of detecting an abnormal RGB video signal in a display device to which both a vertical synchronization signal (V) and a horizontal synchronization signal (H) are input, comprising:
checking for an abnormal state of an input R, G or B signal; and
alerting a user in the event of detection of an abnormal R, G or B signal; the method being **characterised in that** said step of checking comprises steps of:
determining a minimum pixel level value in a predetermined signal portion of a selected input R, G or B signal of the RGB video signal by:
comparing a minimum pixel level value in said predetermined signal portion of the selected R, G, or B signal with a stored minimum pixel level value of a previous R, G or B signal; wherein if the current minimum pixel level value is lower than the stored minimum pixel level value, the stored pixel level value is replaced with the current pixel level value; and
comparing the determined minimum value with a reference value and
if it is determined that the current stored minimum pixel level value is smaller than the reference value, setting a flag to indicate that the selected R, G or B signal is abnormal.

6. A method according to claim 5, wherein the reference value is a predetermined threshold value and the method comprises:
selecting an R,G,B signal and setting a region of the selected R,G,B signal to be checked;
detecting a minimum pixel level value in the checked region of the selected R,G,B signal;
comparing the minimum pixel level value for the selected R,G,B signal with the predetermined threshold value and checking if an abnormal R,G,B signal is present; and
displaying on a screen (160) a message indicating whether the selected R,G,B is abnormal.

7. The method of claim 6, wherein the comparing further comprises: resetting the flag when the minimum pixel level value is larger than the predetermined threshold value.

8. The method of claim 6 or 7, wherein the displaying comprises:
checking whether a flag indicating whether the selected R,G,B signal is abnormal is set;
checking if a video signal checking function is enabled when the flag is set; and
setting how long the message will be displayed and how long a predetermined warning message is displayed, when enabling of the video signal checking function is confirmed.

9. A method according to any one of claims 5 to 8, wherein the R,G,B signals are received from a host (310).

## Patentansprüche

1. Anzeigevorrichtung zum Anzeigen von Bildern in Abhängigkeit von einem RGB-Eingangsvideosignal, einem horizontalen Synchronisationssignal (H) und einem vertikalen Synchronisationssignal (V), in die sowohl das vertikale und als auch das horizontale Synchronisationssignal eingegeben wird, wobei die Anzeigevorrichtung Folgendes umfasst:
Videoüberprüfungsmittel (140, 150) zum Erfassen eines abnormalen Zustands eines R, G oder B-Eingangssignals; und
Warnmittel (120, 150) zum Warnen eines Benutzers im Falle der Erfassung eines abnormalen R, G oder B-Signals durch das Videoüberprüfungsmittel (140, 150), wobei die Anzeigevorrichtung **dadurch gekennzeichnet ist, dass**:
das Videoüberprüfungsmittel ein Minimum-Erfassungsmittel (140) umfasst, um einen Minimum-Pixelpegelwert eines vorbestimmten Signalabschnitts eines ausgewählten R, G oder B-Eingangssignals des RGB-Eingangsvideosignals zu bestimmen; und
eine Steuereinrichtung (150) zum Vergleichen des Minimum-Pixelpegelwerts, der von dem Minimum-Erfassungsmittel (140) ermittelt wird, mit einem Referenzwert;
wobei das Minimum-Erfassungsmittel (140) dafür ausgelegt ist, einen Minimum-Pixelpegelwert in dem vorbestimmten Signalabschnitt des ausgewählten R, G oder B-Signals mit einem gespeicherten Minimum-Pixelpegelwert (230) eines vorherigen R, G oder B-Signals zu vergleichen (220), wobei,
wenn der aktuelle Wert geringer ist als der gespeicherte Minimum-Pixelpegelwert, das Minimum-Erfassungsmittel den gespeicherten Wert durch den aktuellen Wert ersetzt; und wobei,
wenn von der Steuereinrichtung (150) bestimmt wird, dass der aktuelle gespeicherte Minimum-Pixelpegelwert kleiner ist als der Referenzwert, ein Kennzeichen eingestellt wird, das anzeigt, dass das ausgewählte R, G oder B-Signal abnormal ist.

2. Anzeigevorrichtung nach Anspruch 1, wobei das Warnmittel (120, 150) ein Videosignal-Erzeugungsmittel zum Erzeugen eines Videonachrichtensignals umfasst, das von der Anzeigevorrichtung angezeigt wird und das anzeigt, welches der R, G und B-Signale abnormal ist, im Falle der Erfassung eines abnormalen R, G oder B-Signals durch das Videoüberprüfungsmittel (140, 150).

3. Anzeigevorrichtung nach Anspruch 1, wobei das Mindestwert-Erfassungsmittel Folgendes umfasst:
ein Signalauswahlmittel (210) zum Auswählen eines der empfangenen R, G, B-Signale;
eine Speichereinheit (230) zum Speichern des Minimum-Pixelpegelwerts, der in dem bestimmten Bereich des ausgewählten R, G, B-Signals erfasst wurde; und
einen Vergleicher (220) zum Vergleichen des Minimum-Pixelpegelwerts in dem bestimmten Bereich des ausgewählten R, G, B-Signals mit dem gespeicherten Minimum-Pixelpegelwert, der in dem bestimmten Bereich eines vorherigen R, G, B-Signals erfasst wurde, wodurch der Minimum-Pixelpegelwert bestimmt wird.

4. Anzeigevorrichtung nach Anspruch 1, wobei die Steuereinrichtung dafür konfiguriert ist, ein Bildschirmanzeige-Signal (On-Screen-Display - OSD) zu erzeugen, das eine R, G, B-Signalüberprüfungsfunktion aktiviert und deaktiviert.

5. Verfahren zur Erfassung eines abnormalen RGB-Videosignals in einer Anzeigevorrichtung, in die sowohl ein vertikales Synchronisationssignal (V) als auch ein horizontales Synchronisationssignal (H) eingegeben wird, wobei das Verfahren Folgendes umfasst:
Überprüfen auf einen abnormalen Zustand eines R, G oder B-Eingangssignals; und
Warnen eines Benutzers im Falle der Erfassung eines abnormalen R, G oder B-Signals; wobei das Verfahren **dadurch gekennzeichnet ist, dass** der Schritt der Überprüfung folgende Schritte umfasst:
Bestimmen eines Minimum-Pixelpegelwerts in einem vorbestimmten Signalabschnitt eines ausgewählten R, G oder B-Eingangssignals des RGB-Videosignals durch:
Vergleichen eines Minimum-Pixelpegelwerts in dem vorbestimmten Signalabschnitt des ausgewählten R, G oder B-Signals mit einem gespeicherten Minimum-Pixelpegelwert eines vorherigen R, G oder B-Signals; wobei,
wenn der aktuelle Minimum-Pixelpegelwert geringer ist als der gespeicherte Minimum-Pixelpegelwert, der gespeicherte Pixelpegelwert durch den aktuellen Pixelpegelwert ersetzt wird; und
Vergleichen des ermittelten Minimum-Werts mit einem Referenzwert und
wenn bestimmt wird, dass der aktuelle gespeicherte Minimum-Pixelpegelwert kleiner ist als der Referenzwert, Einstellen eines Kennzeichens, das anzeigt, dass das ausgewählte R, G oder B-Signal abnormal ist.

6. Verfahren nach Anspruch 5, wobei der Referenzwert ein vorbestimmter Schwellenwert ist, und wobei das Verfahren Folgendes umfasst:
Auswählen eines R, G, B-Signals und Einstellen eines Bereichs des ausgewählten R, G, B-Signals, der überprüft werden soll;
Erfassen eines Minimum-Pixelpegelwerts in dem überprüften Bereich des ausgewählten R, G, B-Signals;
Vergleichen des Minimum-Pixelpegelwerts für das ausgewählte R, G, B-Signal mit dem vorbestimmten Schwellenwert und Überprüfen, ob ein abnormales R, G, B-Signal vorhanden ist; und
Anzeigen auf einem Bildschirm (160) einer Nachricht, die angibt, ob das ausgewählte R, G, B-Signal abnormal ist.

7. Verfahren nach Anspruch 6, wobei der Vergleich ferner Folgendes umfasst:
Rücksetzen des Kennzeichens, wenn der Minimum-Pixelpegelwert größer ist als der vorgegebene Schwellenwert.

8. Verfahren nach Anspruch 6 oder 7, wobei das Anzeigen Folgendes umfasst:
Überprüfen, ob ein Kennzeichen eingestellt ist, das anzeigt, ob das ausgewählte R, G, B-Signal abnormal ist;
Überprüfen, ob eine Videosignalüberprüfungsfunktion aktiviert wird, wenn das Kennzeichen eingestellt ist; und
Einstellen, wie lange die Nachricht angezeigt wird und wie lange eine vorbestimmte Warnmeldung angezeigt wird, wenn die Aktivierung der Videosignalüberprüfungsfunktion bestätigt ist.

9. Verfahren nach einem der Ansprüche 5 bis 8, wobei die R, G, B-Signale von einem Host (310) empfangen werden.

## Revendications

1. Dispositif d'affichage pour afficher des images en fonction d'un signal vidéo RVB d'entrée, d'un signal de synchronisation horizontal (H) et d'un signal de synchronisation vertical (V), dans lequel les signaux de synchronisation vertical et horizontal sont tous deux appliqués,
le dispositif d'affichage comprenant des moyens de contrôle de vidéo (140, 150) pour détecter un état anormal d'un signal R, V ou B d'entrée; et
des moyens d'alerte (120, 150) pour alerter un utilisateur en cas de détection d'un signal R, V ou B anormal par les moyens de contrôle de vidéo (140, 150),
le dispositif d'affichage étant **caractérisé en ce que** :
les moyens de contrôle de vidéo comprennent un moyen de détection de minimum (140) pour déterminer une valeur de niveau de pixel minimale d'une partie de signal prédéterminée d'un signal R, V ou B d'entrée sélectionné du signal vidéo RVB d'entrée; et
une unité de commande (150) pour comparer la valeur de niveau de pixel minimale déterminée par le moyen de détection de minimum (140), à une valeur de référence;
dans lequel le moyen de détection de minimum (140) est conçu pour comparer (220) une valeur de niveau de pixel minimale, dans ladite partie de signal prédéterminée du signal R, V ou B sélectionné, à une valeur de niveau de pixel minimale consignée (230) d'un signal R, V ou B antérieur, dans lequel
si la valeur actuelle est inférieure à la valeur de niveau de pixel minimale consignée, le moyen de détection de minimum remplace la valeur consignée par la valeur actuelle; et dans lequel
s'il est déterminé par l'unité de commande (150) que la valeur de niveau de pixel minimale consignée actuelle est inférieure à la valeur de référence, un drapeau qui indique que le signal R, V ou B sélectionné est anormal est défini.

2. Dispositif d'affichage selon la revendication 1, dans lequel les moyens d'alerte (120, 150) incluent des moyens de génération de signal vidéo pour générer un signal de message vidéo, à afficher par le dispositif d'affichage, indiquant lesquels des signaux R, V et B sont anormaux en cas de détection d'un signal R, V ou B anormal par les moyens de contrôle de vidéo (140, 150).

3. Dispositif d'affichage selon la revendication 1, dans lequel le détecteur de valeur minimale comprend :
un sélecteur de signal (210) pour sélectionner l'un des signaux R,V,B reçus;
une unité de consignation (230) pour consigner la valeur de niveau de pixel minimale détectée dans la région particulière du signal R,V,B sélectionné; et
un comparateur (220) pour comparer la valeur de niveau de pixel minimale, dans la région particulière du signal R,V,B sélectionné, à la valeur de niveau de pixel minimale consignée détectée dans la région particulière d'un signal R,V,B antérieur, et déterminer ainsi la valeur de niveau de pixel minimale.

4. Dispositif d'affichage selon la revendication 1, dans lequel l'unité de commande est conçue pour générer un signal d'affichage à l'écran (OSD) qui active et désactive une fonction de contrôle de signal R,V,B.

5. Procédé de détection d'un signal vidéo RVB anormal dans un dispositif d'affichage auquel un signal de synchronisation vertical (V) et un signal de synchronisation horizontal (H) sont tous deux appliqués, comprenant :
la vérification d'un état anormal d'un signal R, V ou B d'entrée; et
l'alerte d'un utilisateur en cas de détection d'un signal R, V ou B anormal;
le procédé étant **caractérisé en ce que** ladite étape de vérification comprend les étapes consistant à :
déterminer une valeur de niveau de pixel minimale dans une partie de signal prédéterminée d'un signal R, V ou B d'entrée sélectionné du signal vidéo RVB, en :
comparant une valeur de niveau de pixel minimale, dans ladite partie de signal prédéterminée du signal R, V ou B sélectionné, à une valeur de niveau de pixel minimale consignée d'un signal R, V ou B antérieur; dans lequel
si la valeur de niveau de pixel minimale actuelle est inférieure à la valeur de niveau de pixel minimale consignée, la valeur de niveau de pixel consignée est remplacée par la valeur de niveau de pixel actuelle; et en
comparant la valeur minimale déterminée à une valeur de référence et
s'il est déterminé que la valeur de niveau de pixel minimale consignée actuelle est inférieure à la valeur de référence, en définissant un drapeau pour indiquer que le signal R, V ou B sélectionné est anormal.

6. Procédé selon la revendication 5, dans lequel la valeur de référence est une valeur seuil prédéterminée et le procédé comprend :
la sélection d'un signal R,V,B et la définition d'une région à contrôler du signal R,V,B sélectionné;
la détection d'une valeur de niveau de pixel minimale dans la région contrôlée du signal R,V,B sélectionné;
la comparaison de la valeur de niveau de pixel minimale du signal R,V,B sélectionné à la valeur seuil prédéterminée et la vérification de la présence d'un signal R,V,B anormal; et
l'affichage sur un écran (160) d'un message indiquant si le signal R,V,B sélectionné est anormal.

7. Procédé selon la revendication 6, dans lequel la comparaison comprend en outre :
la redéfinition du drapeau lorsque la valeur de niveau de pixel minimale est supérieure à la valeur seuil prédéterminée.

8. Procédé selon la revendication 6 ou 7, dans lequel l'affichage comprend :
la vérification de la définition d'un drapeau indiquant si le signal R,V,B sélectionné est anormal;
la vérification de l'activation d'une fonction de contrôle de signal vidéo lorsque le drapeau est défini; et
la définition de la durée pendant laquelle le message sera affiché et de la durée pendant laquelle un message d'avertissement prédéterminé est affiché, lorsque l'activation de la fonction de contrôle de signal vidéo est confirmée.

9. Procédé selon l'une quelconque des revendications 5 à 8, dans lequel les signaux R,V,B sont reçus en provenance d'un hôte (310).
